# EUROPEAN PATENT SPECIFICATION

(11) **EP 2 654 100 B1**
(45) Date of publication and mention of the grant of the patent: **24.12.2025**
(21) Application number: 11831783.3
(22) Date of filing: 30.06.2011
(51) Int. Cl.: H01M 50/213, H01M 50/244, H01M 50/262, H01M 50/367

(54) **BATTERY PACK**
BATTERIEPACKUNG
BLOC-PILES

(30) Priority: 13.12.2010 JP 2010276486
(43) Date of publication of application: 23.10.2013
(73) Proprietor: Panasonic Intellectual Property Management Co., Ltd., Osaka-shi, Osaka 540-6207 (JP)
(72) Inventor: YASUI, Shunsuke, Osaka 540-6207 (JP); AOKI, Tomoaki, Osaka 540-6207 (JP); TAKASAKI, Hiroshi, Osaka 540-6207 (JP)
(74) Representative: Grünecker Patent- und Rechtsanwälte PartG mbB
(86) International application number: PCT/JP2011/003753
(87) International publication number: WO 2012/081137

(56) References cited:
- JP-A- 2001 126 691
- JP-A- 2005 322 434
- JP-A- 2006 244 981
- JP-A- 2010 140 695
- JP-A- H07 245 089
- JP-A- H10 255 736
- US-A1- 2008 026 284
- US-A1- 2010 173 181

## Description

The present invention relates to battery packs in which a plurality of battery modules are stacked.

Battery packs including a plurality of batteries accommodated in a case to allow an output of a predetermined voltage and capacitance are widely used as power sources of various devices, vehicles, etc. Specifically, the technique of forming modules of battery assemblies obtained by connecting general-purpose batteries in parallel and/or in series to output a predetermined voltage and capacity, and combining the battery modules together to be applicable to various applications is beginning to be used. This module forming technique can reduce the size and weight of the battery modules themselves by increasing the performance of batteries accommodated in the battery modules. Thus, this module forming technique has various advantages, an example of which is that workability can be improved in assembling a battery pack, and the flexibility in mounting the battery module in areas of limited space, such as a vehicle, can be increased. Moreover, battery packs have been expected to be applied to charge systems working with photovoltaic power generation systems.

On the other hand, as the performance of batteries accommodated in battery modules increases, it becomes important to ensure safety of the battery modules in which a plurality of batteries are collected in addition to ensuring safety of the batteries themselves. In particular, when gas is generated due to heat generated by, for example, an internal short-circuit in a battery, a safety valve is opened to release the high-temperature gas, peripheral batteries may be exposed to the high-temperature gas, and normal batteries may also be affected by the high-temperature gas and deteriorated sequentially.

To solve such a problem, Patent Document 1 discloses an exhaust mechanism in which a gas release section of each of batteries accommodated in a battery pack is connected to an exhaust air duct, and high-temperature gas released from a battery in case of an abnormal state is allowed to flow through the exhaust air duct, thereby discharging the gas outside the battery pack. With this mechanism, an exhaust path of the gas is controlled by the exhaust air duct, so that the gas can be released outside with its temperature being lowered while preventing the gas from being burned by contact with oxygen. Moreover, Patent Document 2 discloses a battery case having exhaust ports.

### PATENT DOCUMENT

PATENT DOCUMENT 1: Japanese Patent Publication No. 2008-117765
PATENT DOCUMENT 2: US 2008/026284

### SUMMARY OF THE INVENTION

### TECHNICAL PROBLEM

Various battery modules each configured to output a predetermined voltage and a predetermined capacitance are combined with each other to form a battery pack (storage unit), so that the battery modules can be applicable to a various applications.

On the other hand, when a battery module includes an exhaust air duct configured to release abnormal gas from a battery to the outside, and a plurality of such battery modules are combined with each other to form a battery pack, if gas released from the exhaust air duct is still at a high temperature, peripheral battery modules subjected to the high-temperature gas may be thermally influenced.

Moreover, when the battery pack further includes an exhaust path by which the exhaust air ducts of the battery modules are connected to each other, various exhaust paths have to be formed depending on the combination of the battery modules. This complicates assembly processes, and thus such a configuration is less suitable to a module forming technique.

In view of the foregoing, the present invention was devised. It is a major objective of the present invention to provide a highly safe battery pack in which a plurality of battery modules are stacked, and an exhaust path can be formed with a simple structure, and which is suitable to a module forming technique.
This is achieved by the features of the independent claims.

With this configuration, the framework having a hollow structure and fixing the battery pack is also used as an exhaust path of gas released through the outlet of the battery module, so that the exhaust path can be formed with a simple structure, and highly safe battery packs suitable to a module forming technique can be obtained.

Here, in the exhaust path formed by the framework, adjusting positions in which the intake port and the exhaust port are disposed, combination of frame bodies forming the framework, or the like can increase the length of the exhaust path of gas from the intake port to the exhaust port. Thus, even when the gas released through the outlet of the battery module has a high temperature, the gas can be released from the exhaust port to the outside with its temperature being lowered while preventing the gas from being burned by contact with oxygen.

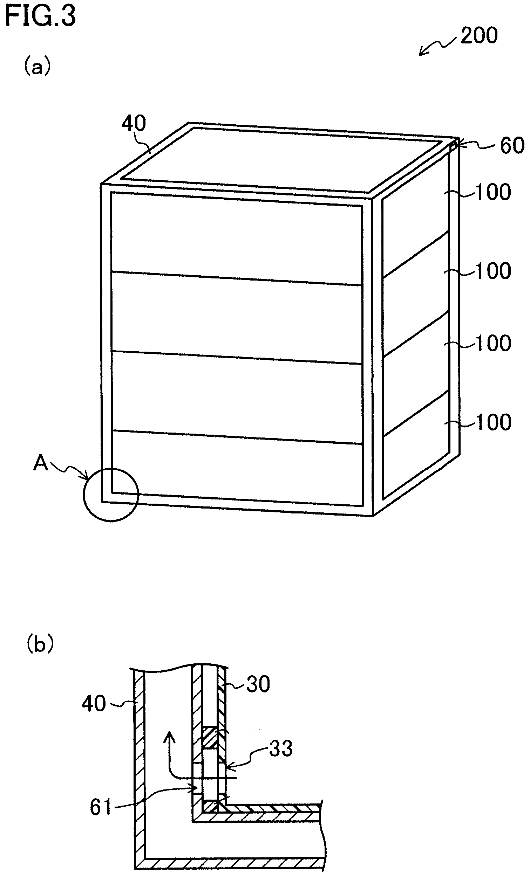

According to the present invention, it is possible to provide a highly safe battery pack in which a plurality of battery modules are stacked, and an exhaust path can be formed with a simple configuration, and which is suitable to a module forming technique.
In the following, Figures 3A and 3B only illustrate aspects useful for understanding the present invention.
[FIG. 1] FIG. 1 is a cross-sectional view schematically illustrating a configuration of a cell used in a battery module of an embodiment of the present invention.
[FIG. 2] FIGS. 2A, 2B are views schematically illustrating a configuration of the battery module of the embodiment of the present invention, where FIG. 2A is a cross-sectional view, and FIG. 2B is a perspective view.
[FIG. 3] FIG. 3A is a perspective view schematically illustrating a configuration of a battery pack in which multiple ones of the battery modules of the embodiment of the present invention are stacked, and FIG. 3B is a cross-sectional view illustrating an enlargement of the portion indicated by the arrow A of FIG. 3A.
[FIG. 4] FIG. 4 is a cross-sectional view schematically illustrating a configuration of a battery pack of another embodiment of the present invention.
[FIG. 5] FIG. 5 is a perspective view schematically illustrating a configuration of a framework for fixing a battery pack of another embodiment of the present invention.
[FIG. 6] FIG. 6 is a perspective view schematically illustrating a configuration of a battery pack of another embodiment of the present invention.
[FIG. 7] FIG. 7 is a longitudinal cross-sectional view schematically illustrating a configuration of a flat plate forming a housing for fixing the battery pack of the another embodiment of the present invention.
[FIG. 8] FIG. 8 is a cross-sectional view illustrating how an outlet of a battery module is connected to an intake port of a framework in another embodiment of the present invention.

Embodiments of the present invention will be described in detail below with reference to the drawings. The present invention is not limited to the following embodiments. The embodiment can be modified without deviating from the effective scope of the present invention. The embodiment can be combined with other embodiments.

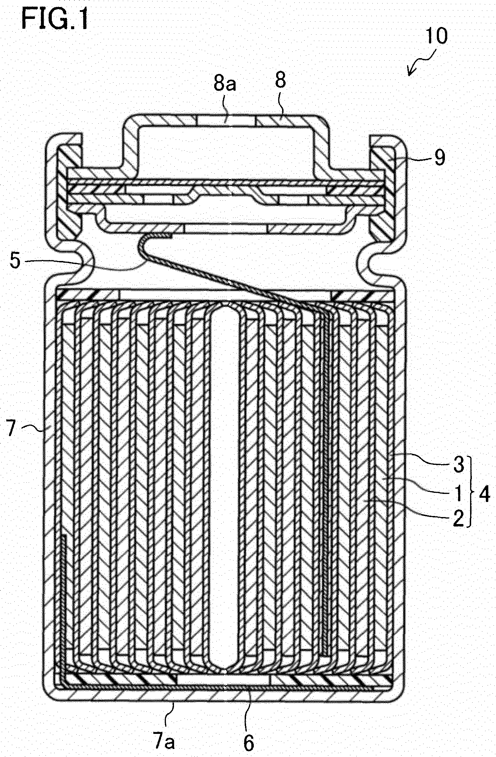

FIG. 1 is a cross-sectional view schematically illustrating a configuration of a battery 10 used in a battery module of an embodiment of the invention. Note that the battery used in the battery module of the present invention may be a battery which can also be used alone as a power source of portable electronic devices such as notebook-sized personal computers (a battery used in a battery module is hereinafter referred to as a "cell"). In this case, a high-performance general-purpose battery can be used as the cell in the battery module, and thus, performance enhancement and cost reduction of the battery module can easily be made.

The cell 10 used in the battery module of the present invention can be, for example, a cylindrical lithium ion secondary battery as illustrated in FIG. 1. The lithium ion secondary battery has an ordinary configuration, and has a safety mechanism to release gas to the outside when the pressure in the battery increases due to an internal short-circuit, or the like. The configuration of the cell 10 will specifically be described below with reference to FIG. 1.

As illustrated in FIG. 1, an opening of a cell case 7 of the cell 10 is sealed with a sealing plate 8 via a gasket 9. In the cell case 7, an electrode group 4 formed by winding a positive electrode plate 1 and a negative electrode plate 2 with a separator 3 interposed between the positive electrode plate 1 and the negative electrode plate 2 is accommodated together with a nonaqueous electrolyte. The positive electrode plate 1 is connected via a positive electrode lead 5 to the sealing plate 8 also serving as a positive electrode terminal. Moreover, the negative electrode plate 2 is connected via a negative electrode lead 6 to a bottom of the cell case 7, the bottom also serving as a negative electrode terminal. Note that an opening portion 8a is formed in the sealing plate 8, and when abnormal gas is generated in the cell 10, the abnormal gas is released through the opening portion 8a to the outside of the cell case 7.

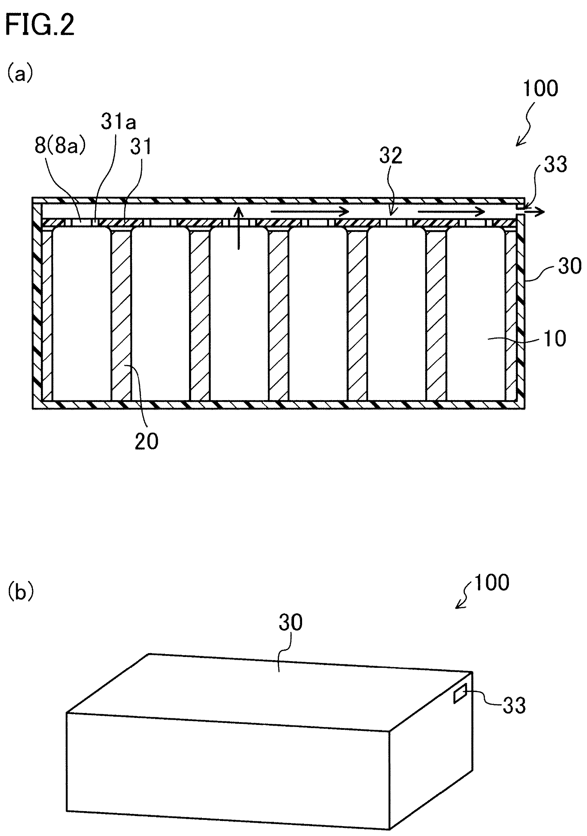

FIGS. 2A, 2B are views schematically illustrating a configuration of a battery module 100 included in a battery pack of an embodiment of the present invention, where FIG. 2A is a cross-sectional view, and FIG. 2B is a perspective view.

As illustrated in FIG. 2A, the battery module 100 of the present embodiment includes multiple ones of the cell 10 aligned and accommodated in a case 30. Each cell 10 is accommodated in an accommodation section formed in a holder 20. Here, the holder 20 is made of a material having thermal conductivity, and each cell 10 is preferably accommodated in an accommodation section 21 with an outer circumferential surface of the cell 10 being in contact with an inner circumferential surface of the accommodation section 21. This allows heat generated in the cell 10 to be rapidly dissipated into the holder 20, so that the temperature rise of the cell 10 can be effectively reduced.

A flat plate 31 is disposed to face the positive electrode terminals 8 of the plurality of cells 10, thereby forming an exhaust chamber 32 between the case 30 and the flat plate 31. Through holes 31a into which the positive electrode terminals 8 of the cells 10 are inserted are formed in the flat plate 31. The abnormal gas released through the opening portion 8a of the cell 10 flows through the exhaust chamber 32 as illustrated in FIG. 2A, and is released through an outlet 33 provided on a side surface of the case 30 to the outside of the case 30. Note that such an exhaust mechanism is not limited to the configuration illustrated in FIG. 2A, but a battery module without the exhaust chamber 32 may be possible.

FIG. 3A is a perspective view schematically illustrating a configuration of a battery pack 200 in which multiple ones of the battery module 100 are stacked. FIG. 3B is a cross-sectional view illustrating an enlargement of the portion indicated by the arrow A of FIG. 3A.

The battery pack 200 of the present embodiment is fixed to a rectangular parallelepiped framework 40 built by frame bodies each having a hollow structure. Note that methods for fixing the battery pack 200 are not specifically limited. For example, fixing tabs may be provided to the cases 30 of the battery modules 100, and the fixing tabs may be fixed to connecting sections provided to the framework 40 by bolts, or the like.

Here, the outlet 33 of each battery module 100 is connected to an intake port provided in part of the framework 40. For example, as illustrated in FIG. 3B, the outlet 33 of the battery module 100 at a lowermost level is connected to an intake port 61 provided to the framework 40 at the position of the framework 40 indicated by the arrow A of FIG. 3A. Note that methods for connecting the outlet 33 to the intake port 61 are not specifically limited. For example, as illustrated in FIG. 3B, a gap formed between the case 30 of the battery module 100 and the framework 40 may be hermetically sealed with a ring-shaped elastic member (e.g., sponge or rubber), and the outlet 33 may be connected to the intake port 61 via the hermetically sealed space.

Moreover, as illustrated in FIG. 3A, an exhaust port 60 is provided in part of the framework 40, so that gas released through the outlet 33 of the battery module 100 flows through a hollow section of the frame body, and is released from the exhaust port 60 to the outside.

With this configuration, the framework 40 fixing the battery pack 200 and having the hollow structure is also used as an exhaust path of the gas released through the outlet 33 of the battery module 100. Thus, the exhaust path can be formed with a simple configuration, which makes it possible to obtain a highly safe battery pack 200 suitable to a module forming technique.

Although positions in which the intake port 61 and the exhaust port 60 of the framework 40 are disposed are not specifically limited, the intake port 61 and the exhaust port 60 are preferably arranged, for example, near diagonally opposite corners of the rectangular parallelepiped framework as illustrated in FIG. 3A. In this way, the length of the exhaust path of the gas from the intake port 61 to the exhaust port 60 can be increased. Thus, even when the gas released through the outlet 33 of the battery module 100 has a high temperature, the gas can be released from the exhaust port 60 to the outside with its temperature being lowered while preventing the gas from being burned by contact with oxygen.

Although configurations of the framework 40 of the present invention are not specifically limited, the framework 40 preferably has, for example, a rectangular cross section. With this configuration, the outlet 33 of each battery module 100 can be easily connected to the intake port 61 of the framework 40. A material for the framework 40 is a material having high thermal conductivity, and in particular, metal is preferably used. With this configuration, heat of gas flowing through the hollow section of the frame body is transferred to the framework 40, and can be efficiently dissipated into the outside. Moreover, when pressure loss of exhaust gas occurs in the exhaust path of the framework 40, a backflow of the gas may be caused. For this reason, the cross-sectional area of the frame body is preferably such a size that causes no pressure loss of the gas. For example, in the case of a lithium-ion battery, an exhaust test using a tubular exhaust air duct shows that the cross-sectional area of the frame body is preferably 400 mm² or larger. Note that when the cross-sectional area of the frame body is increased, if a flow of gas through the exhaust air duct is a laminar flow, the rate of the gas in contact with a wall surface of the exhaust air duct is relatively reduced, which reduces the efficiency of heat exchange at the framework 40. However, when positions in which the intake port 61 and the exhaust port 60 of the framework 40 are arranged are adjusted so that the flow of the exhaust gas hits the wall of the framework 40 to change the flow of the gas to a turbulent flow, it is possible to reduce degradation in heat exchange efficiency at the framework 40.

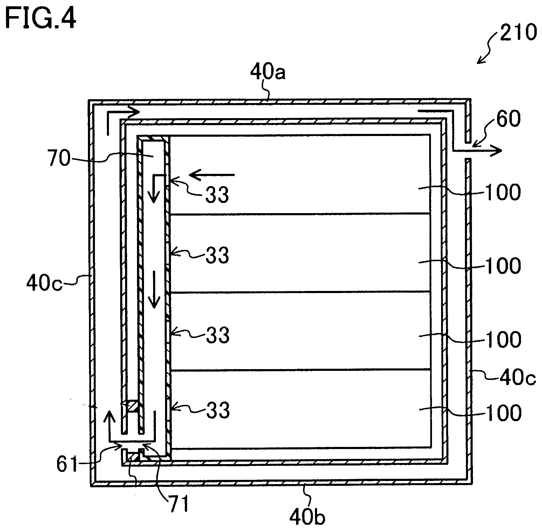

FIG. 4 is a cross-sectional view schematically illustrating a configuration of a battery pack 210 of another embodiment of the present invention.

As illustrated in FIG. 4, a framework 40 of the present embodiment includes an upper frame body 40a and a lower frame body 40b in a stacking direction of battery modules 100, and vertical frame bodies 40c by which the upper frame body 40a is connected to the lower frame body 40b. The battery pack 210 includes an exhaust air duct 70 connecting outlets 33 of the plurality of battery modules 100 in the stacking direction. An outlet 71 of the exhaust air duct 70 is connected to an intake port 61 provided at a lower end section of the vertical frame body 40c of the framework 40. In this way, gas released through the outlet 33 of the battery module 100 flows through the exhaust air duct 70, and a hollow section of the vertical frame body 40c of the framework 40, and is released from an exhaust port 60 provided at an upper end section of the vertical frame body 40c to the outside.

With this configuration, the gas released through the outlet 33 of the battery module 100 can be guided via the exhaust air duct 70 to the intake port 61 provided at the lower end section of the vertical frame body 40c, further flows through the hollow section of the vertical frame body 40c, and can be released from the exhaust port 60 provided at the upper end section of the vertical frame body 40c. In this way, the length of an exhaust path of the gas from the outlet 33 of the battery module 100 to the exhaust port 60 can be increased. Thus, even when the gas released through the outlet 33 of the battery module 100 has a high temperature, the gas can be released from the exhaust port 60 to the outside with its temperature being lowered through heat exchange with the framework 40 while preventing the gas from being burned by contact with oxygen.

Although the intake port 61 is provided at the lower end section of the vertical frame body 40c of the framework 40 in FIG. 4, the intake port 61 may be provided to the lower frame body 40b. Although the exhaust port 60 is provided at the upper end section of the vertical frame body 40c of the framework 40, the exhaust port 60 may be provided to the upper frame body 40a.

Moreover, in the present embodiment, configurations of the exhaust air duct 70 are not specifically limited. For example, the exhaust air duct 70 may include openings (not shown) corresponding to the outlets 33 of the battery modules 100, and the outlets 33 may be connected to the openings by the connecting method as illustrated in FIG. 3B. Alternatively, for example, when the battery modules 100 each have a configuration as illustrated in FIG. 2A, the outlet 33 and an inlet (not shown) which are connected to the exhaust chamber 32 may be provided on side surfaces of each case which face each other in a stacking direction of the battery modules 100 (in a direction perpendicular to the plane of the paper of FIG. 2A), and the outlet 33 of each battery module 100 may be connected to the inlet of the battery module 100 provided directly thereunder by, for example, a hollow connecting member, so that an exhaust air duct 70 can be formed. In this case, the outlet 33 of the battery module 100 at a lowermost level is connected to the intake port 61 provided at the lower end section of the vertical frame body 40c (or the lower frame body 40b) of the framework 40. Moreover, the inlet of the battery module 100 at an uppermost level may be hermetically sealed with hermetical sealing member, or the like so that exhaust gas is not released through the inlet to the outside.

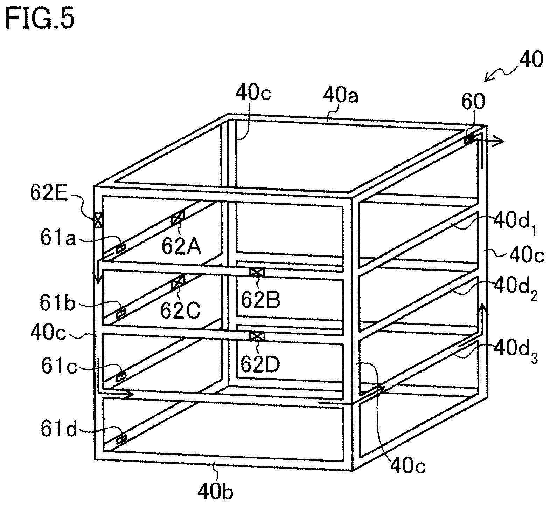

FIG. 5 is a perspective view schematically illustrating a configuration of a framework 40 for fixing a battery pack of another embodiment of the present invention.

As illustrated in FIG. 5, in addition to an upper frame body 40a and a lower frame body 40b in a stacking direction of battery modules 100 (not shown), and vertical frame bodies 40c by which the upper frame body 40a is connected to the lower frame body 40b, the framework 40 of the present embodiment further includes intermediate frame bodies 40d₁, 40d₂, 40d₃ the number of which (three in FIG. 5) corresponds to the number of stacked battery modules 100 (four in FIG. 5).

Outlets 33 (not shown) of the battery modules 100 are respectively connected to intake ports 61a, 61b, 61c, 61d provided to the intermediate frame bodies 40d₁, 40d₂, 40d₃ and the lower frame body 40b corresponding to the battery modules 100. Thus, gas released through the outlets 33 of the battery modules 100 flows through hollow sections of the intermediate frame bodies 40di, 40d₂, 40d₃ and the vertical frame bodies 40c of the framework 40, and is released from an exhaust port 60 provided to the upper frame body 40a of the framework 40 to the outside.

With this configuration, the outlets 33 of the battery modules 100 can be connected to the intake ports 61a, 61b, 61c provided to the intermediate frame bodies 40d₁, 40d₂, 40d₃ corresponding to the battery modules 100. Thus, it is possible to increase flexibility in arranging the outlets 33 in the cases 30 of the battery modules 100.

Here, as illustrated in FIG. 5, a plurality of partitions for blocking a flow of the gas released through the outlet 33 of the battery module 100 may be provided in parts of the hollow sections of the intermediate frame bodies 40di, 40d₂, 40d₃ and the vertical frame bodies 40c of the framework 40.

Here, the partitions are arranged so that the gas released through the outlet 33 of the battery module 100 flows through the hollow section of the intermediate frame body 40d₁, 40d₂, 40d₃ or the lower frame body 40b of the framework 40 which is located at a lower level in the stacking direction, and is released from the exhaust port 60 provided to the upper frame body 40a of the framework 40 to the outside.

For example, arranging partitions 62A-62E at the positions shown in FIG. 5 blocks a path through which gas released into the intake port 61a connected to the outlet 33 of the battery module 100 at an uppermost level flows via the hollow sections of the upper frame body 40a and the intermediate frame bodies 40d₁, 40d₂ to the exhaust port 60. Therefore, the gas released into the intake port 61a flows, along the path indicated by the arrow of FIG. 5, via the intermediate frame body 40d₃ located at a lower level, and is released from the exhaust port 60 provided to the upper frame body 40a to the outside. In this way, the length of an exhaust path of the gas from the outlet 33 of the battery module 100 at the uppermost level to the exhaust port 60 can be increased. Thus, even when the gas released through the outlet 33 of the battery module 100 has a high temperature, the gas can be released from the exhaust port 60 to the outside with its temperature being lowered while preventing the gas from being burned by contact with oxygen.

Note that in the present invention, positions in which "partitions" are provided are not specifically limited. Depending on the configuration of the framework 40, the positions of the partitions can be accordingly determined to increase the length of a path through which the gas released through the outlet 33 of the battery module 100 is released via the hollow sections of the frame bodies from the exhaust port 60 provided in part of the framework 40 to the outside.

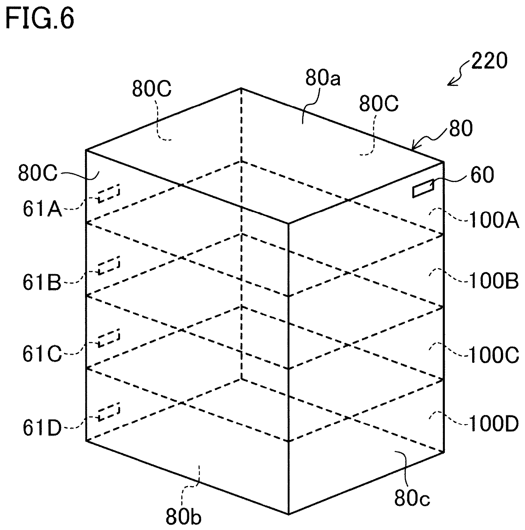

FIG. 6 is a perspective view schematically illustrating a configuration of a battery pack 220 of another embodiment of the present invention.

As illustrated in FIG. 6, the battery pack 220 of the present embodiment is different from the configuration of FIG. 3. The battery pack 200 of FIG. 3 is fixed to the framework 40 having the hollow structure whereas the battery pack 220 of the present embodiment is fixed to a housing 80 formed by connecting flat plates each having a hollow structure into a rectangular parallelepiped. Here, the housing 80 includes an upper flat plate 80a and a lower flat plate 80b in a stacking direction of battery modules 100, and vertical flat plates 80c by which the upper flat plate 80a is connected to the lower flat plate 80b.

As illustrated in FIG. 6, a plurality of battery modules 100A-100D are stacked to form the battery pack 220. Outlets 33 (not shown) of the battery modules 100A-100D are respectively connected to intake ports 61A-61D provided in parts of the housing 80. Gas released through the outlet of at least one of the battery modules 100A-100D flows through a hollow section of the housing 80, and is released from an exhaust port 60 provided in part of the housing 80 to the outside.

With this configuration, the housing 80 fixing the battery pack 220 and having the hollow structure is also used as an exhaust path of the gas released through the outlet 33 of at least one of the battery modules 100A-100D. Thus, the exhaust path can be formed with a simple configuration, which makes it possible to obtain a highly safe battery pack 220 suitable to a module forming technique.

In FIG. 6, the outlets 33 of the battery modules 100A-100D are respectively connected to the intake ports 61A-61D provided in the parts of the housing 80. However, as illustrated in FIG. 4, an exhaust air duct connecting the outlets 33 of the battery modules 100A-100D in the stacking direction may be provided, and an outlet of the exhaust air duct may be connected to the intake port 61D provided at a lower end section of the vertical flat plates 80c.

With this configuration, the gas released through the outlet 33 of at least one of the battery modules 100A-100D can be guided via an exhaust air duct 70 to the intake port 61D provided at the lower end section of the vertical flat plate 80c, further flows through a hollow section of the vertical flat plate 80c, and can be released from the exhaust port 60 provided at an upper end section of the vertical flat plate 80c. In this way, the length of the exhaust path of the gas from the outlet 33 of each of the battery modules 100A-100D to the exhaust port 60 can be increased. Thus, even when the gas released through the outlet 33 of at least one of the battery modules 100A-100D has a high temperature, the gas can be released from the exhaust port 60 to the outside with its temperature being lowered while preventing the gas from being burned by contact with oxygen.

Although the intake port 61D is provided at the lower end section of the vertical flat plate 80c of the housing 80 in FIG. 6, the intake port 61D may be provided to the lower flat plate 80b. Moreover, the exhaust port 60 is provided at the upper end section of the vertical flat plate 80c of the housing 80, but the exhaust port 60 may be provided to the upper flat plate 80a.

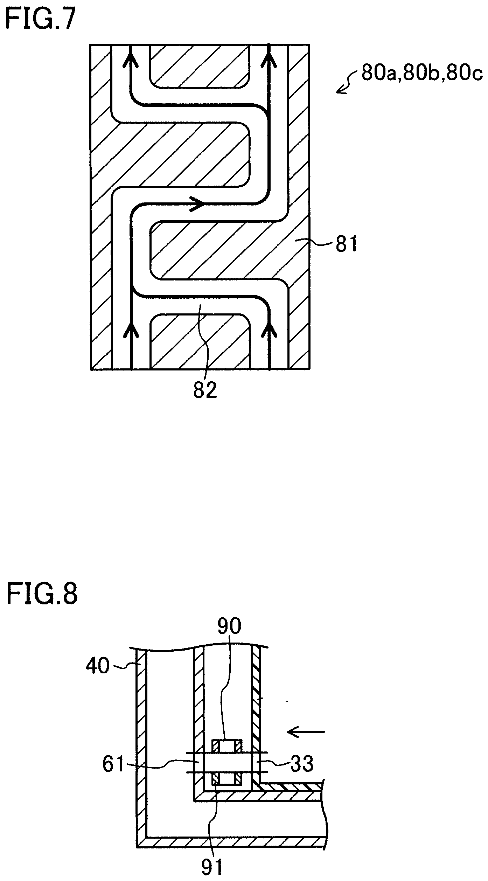

FIG. 7 is a longitudinal cross-sectional view illustrating a configuration of the flat plates 80a, 80b, 80c forming the housing 80 for fixing the battery pack 220 of the present embodiment.

As illustrated in FIG. 7, each of the flat plates 80a, 80b, 80c is partitioned, in terms of its interior, into a shield section 81 for controlling the flow of gas and a hollow section 82 through which the gas flows. Here, the shield section 81 partitions the hollow section 82 so that the gas serpentinely flows in the hollow section 82. In this way, the length of the path of the gas flowing through the hollow sections 82 of the flat plates 80a, 80b, 80c can be increased. Thus, even when the gas released through the outlet 33 of at least one of the battery modules 100A-100D has a high temperature, the gas can be released from the exhaust port 60 to the outside with its temperature being lowered while preventing the gas from being burned by contact with oxygen.

FIG. 8 is a cross-sectional view illustrating how an outlet 33 of a battery module 100 of another embodiment of the present invention is connected to an intake port 61 provided to a framework 40.

As illustrated in FIG. 8, the outlet 33 of the battery module 100 is connected to the intake port 61 provided to the framework 40 by a connecting member 90. Here, the connecting member 90 includes an annular elastic member 91 provided at a flange section formed at a hollow cylindrical section thereof, and the cylindrical section of the connecting member 90 is inserted into the outlet 33 of the battery module 100 and the intake port 61 of the framework 40. In this way, the connecting member 90 can connect the outlet 33 to the intake port 61.

It should be recognized that the foregoing embodiments are only preferred examples of the present invention, and should not be taken as limiting the scope of the present invention, and various changes and modifications may be made. For example, the framework 40 and the housing 80 are rectangular parallelepipeds in the embodiments above, but the framework 40 and the housing 80 may have any shape as long as they fix the battery pack. Moreover, the intermediate frame bodies 40d₁, 40d₂, 40d₃ are provided to the battery modules 100, respectively, but the number of intermediate frame bodies is not specifically limited. Further, the framework 40 may include a flat plate having a hollow structure connected to other frame bodies instead of at least one plane built by the frame bodies. Furthermore, a lithium ion secondary battery has been used as the cell 10, but other secondary batteries (e.g., nickel-hydrogen batteries) may be used.

### INDUSTRIAL APPLICABILITY

The present disclosure is useful for power sources for driving automobiles, electric motorcycles, or electric play equipment, storage units, for example.

### DESCRIPTION OF REFERENCE CHARACTERS

- 1: Positive Electrode Plate
- 2: Negative Electrode Plate
- 3: Separator
- 4: Electrode Group
- 5: Positive Electrode Lead
- 6: Negative Electrode Lead
- 7: Cell Case
- 8: Positive Electrode Terminal (Sealing Plate)
- 8a: Opening Portion
- 9: Gasket
- 10: Cell
- 20: Holder
- 21: Accommodation Section
- 30: Case
- 31: Flat Plate
- 31a: Through Hole
- 32: Exhaust Chamber
- 33: Outlet
- 40: Framework
- 40a: Upper Frame Body
- 40b: Lower Frame Body
- 40c: Vertical Frame Body
- 40d: Intermediate Frame Body
- 60: Exhaust Port
- 61: Intake Port
- 70: Exhaust Air Duct
- 71: Outlet
- 80: Housing
- 80a: Upper Flat Plate
- 80b: Lower Flat Plate
- 80c: Vertical Flat Plate
- 81: Shield Section
- 82: Hollow Section
- 100: Battery Module
- 200, 210, 220: Battery Pack

## Claims

1. A battery pack comprising:
a plurality of stacked battery modules (100); wherein
each battery module (100) includes
a case (30) in which a plurality of cells (10) are accommodated; and
an outlet (33) which is provided on a side surface of the case (30) and thorough which gas released from the cell (10) is released outside the case (30); wherein
the battery pack is fixed to a framework (40) built by frame bodies each having a hollow structure or a housing (80) formed by connecting flat plates (80a-80c) each having a hollow structure;
**characterized in that** the framework (40) includes
an upper frame body (40a) and a lower frame body (40b) in a stacking direction of the battery modules (100); and
vertical frame bodies (40c) by which the upper frame body (40a) is connected to the lower frame body (40b); wherein
each of the upper frame body (40a), the lower frame body (40b), and the vertical frame bodies (40c) has a hollow section therein;
the battery pack further includes an exhaust air duct (70) connecting the outlets (33) of the plurality of battery modules (100) in the stacking direction;
the exhaust air duct (70) is connected to the hollow section of the lower frame body (40b) of the framework (40) or the hollow sections of the vertical frame bodies (40c) of the framework (40); and
the gas released through the outlets (33) of the battery modules (100) flows through the exhaust air duct (70) and the hollow section of the lower frame body (40b) of the framework (40) or the hollow sections of the vertical frame bodies (40c) of the framework (40), and is released from an exhaust port (60) provided for the upper frame body (40a) or an upper end section of each of the vertical frame bodies (40c) of the framework (40) to the outside; or
the housing (80) includes
an upper flat plate (80a) and a lower flat plate (80b) in a stacking direction of the battery modules (100); and
vertical flat plates (80c) by which the upper flat plate (80a) is connected to the lower flat plate (80b);
each of the upper flat plate (80a), the lower flat plate (80b), and the vertical flat plates (80c) has a hollow section therein;
the battery pack further includes an exhaust air duct (70) connecting the outlets (33) of the plurality of battery modules (100) in the stacking direction;
the exhaust air duct (70) is connected to the hollow section of the lower flat plate (80b) or the hollow sections of the vertical flat plates (80c); and
the gas released through the outlets (33) of the battery modules (100) flows through the exhaust air duct (70) and the hollow section of the lower flat plate (80b) of the housing (80) or the hollow sections of the vertical flat plates (80c) of the housing (80), and is released from an exhaust port (60) provided for the upper flat plate (80a) or an upper end section of each of the vertical flat plates (80c) to the outside.

2. The battery pack of claim 1, wherein
the battery pack is fixed to the framework (40); and
a partition for blocking a flow of the gas released through the outlets (33) of the battery modules (100) is provided in part of the hollow section of the lower frame body (40b) or some of the hollow sections of the vertical frame bodies (40c) of the framework (40); and
the gas released through the outlets (33) of the battery modules (100) flows through the hollow section of the lower frame body (40b) of the framework (40), and is released from the exhaust port (60) provided in the upper frame body (40a) of the framework (40) to the outside when the partition blocks the flow of the gas.

3. The battery pack of claim 1, wherein
the battery pack is fixed to the framework (40); and
the hollow section of the framework (40) has a cross-sectional area of 500 mm² or larger.

4. The battery pack of claim 1, wherein
the battery pack is fixed to the framework (40); and
the framework (40) is made of a metallic material.

5. The battery pack of claim 1, wherein
the battery module (100) further includes an exhaust chamber (32) separated from a battery chamber in which the plurality of cells (10) are accommodated;
an opening portion (8a) formed in each cell (10) to release gas is connected to the exhaust chamber (32); and
the exhaust chamber (32) is connected to the outlet (33) provided on the side surface of the case (30).

## Patentansprüche

1. Batteriepack, der umfasst:
eine Vielzahl übereinandergeschichteter Batteriemodule (100); wobei
jedes Batteriemodul (100) einschließt:
einen Behälter (30), in dem eine Vielzahl von Zellen (10) aufgenommen sind; sowie
einen Auslass (33), der an einer Seitenfläche des Behälters (30) vorhanden ist und durch den aus der Zelle (10) abgelassenes Gas aus dem Behälter (30) nach außen abgelassen wird; wobei
der Batteriepack an einem Rahmen (40) befestigt ist, der aus Rahmenkörpern aufgebaut ist, die jeweils eine hohle Struktur oder ein Gehäuse (80) aufweisen, das durch Verbinden flacher Platten (80a-80c) gebildet wird, die jeweils eine hohle Struktur aufweisen;
**dadurch gekennzeichnet, dass** der Rahmen (40) einschließt:
einen oberen Rahmenkörper (40a) und einen unteren Rahmenkörper (40b) in einer Schichtungsrichtung der Batteriemodule (100); sowie
vertikale Rahmenkörper (40c), über die der obere Rahmenkörper (40a) mit dem unteren Rahmenkörper (40b) verbunden ist; wobei
der obere Rahmenkörper (40a), der untere Rahmenkörper (40b) und die vertikalen Rahmenkörper (40c) jeweils einen hohlen Teilabschnitt darin aufweisen;
der Batteriepack des Weiteren eine Abluftleitung (70) einschließt, die die Auslässe (33) der Vielzahl von Batterie-Modulen (100) in der Schichtungsrichtung verbindet;
die Abluftleitung (70) mit dem hohlen Teilabschnitt des unteren Rahmenkörpers (40b) des Rahmens (40) oder den hohlen Teilabschnitten der vertikalen Rahmenkörper (40c) des Rahmens (40) verbunden ist; und
das über die Auslässe (33) der Batteriemodule (100) abgelassene Gas durch die Abluftleitung (70) und den hohlen Teilabschnitt des unteren Rahmenkörpers (40b) des Rahmens (40) oder die hohlen Teilabschnitte der vertikalen Rahmenkörper (40c) des Rahmens (40) strömt und über eine Ableitöffnung (60), die für den oberen Rahmenkörper (40a) oder einen oberen End-Teilabschnitt jedes der vertikalen Rahmenkörper (40c) des Rahmens (40) vorhanden ist, nach außen abgelassen wird; oder
das Gehäuse (80) enthält:
eine obere flache Platte (80a) und eine untere flache Platte (80b) in einer Schichtungsrichtung der Batteriemodule (100); sowie
vertikale flache Platten (80c), über die die obere flache Platte (80a) mit der unteren flachen Platte (80b) verbunden ist;
die obere flache Platte (80a), die untere flache Platte (80b) und die vertikalen flachen Platten (80c) jeweils einen hohlen Teilabschnitt darin aufweisen;
der Batteriepack des Weiteren eine Abluftleitung (70) einschließt, die die Auslässe (33) der Vielzahl von Batterie-Modulen (100) in der Schichtungsrichtung verbindet;
die Abluftleitung (70) mit dem hohlen Teilabschnitt der unteren flachen Platte (80b) oder den hohlen Teilabschnitten der vertikalen flachen Platten (80c) verbunden ist; und
das über die Auslässe (33) der Batteriemodule (100) abgelassene Gas durch die Abluftleitung (70) und den hohlen Teilabschnitt der unteren flachen Platte (80b) des Gehäuses (80) oder die hohlen Teilabschnitte der vertikalen flachen Platten (80c) des Gehäuses (80) strömt und über eine Ableitöffnung (60), die für die obere flache Platte (80a) vorhanden ist, oder einen oberen End-Teilabschnitt jeder der vertikalen flachen Platten (80c) nach außen abgelassen wird.

2. Batteriepack nach Anspruch 1, wobei
der Batteriepack an dem Rahmen (40) befestigt ist; und
eine Trennwand zum Sperren eines Stroms des über die Auslässe (33) der Batteriemodule (100) abgelassenen Gases in einem Teil des hohlen Teilabschnitts des unteren Rahmenkörpers (40b) oder einigen der hohlen Teilabschnitte der vertikalen Rahmenkörper (40c) des Rahmens (40) vorhanden ist; und
das über die Auslässe (33) der Batteriemodule (100) abgelassene Gas durch den hohlen Teilabschnitt des unteren Rahmenkörpers (40b) des Rahmens (40) strömt und über die in dem oberen Rahmenkörper (403A) vorhandene Ableitöffnung (60) nach außen abgelassen wird, wenn die Trennwand den Strom des Gases sperrt.

3. Batteriepack nach Anspruch 1, wobei
der Batteriepack an dem Rahmen (40) befestigt ist; und
der hohle Teilabschnitt des Rahmens (40) eine Querschnittsfläche von 500 mm2 oder mehr hat.

4. Batteriepack nach Anspruch 1, wobei
der Batteriepack an dem Rahmen (40) befestigt ist; und
der Rahmen aus einem Metallmaterial besteht.

5. Batteriepack nach Anspruch 1, wobei
das Batteriemodul (100) des Weiteren eine Abgaskammer (32) einschließt, die von einer Batteriekammer getrennt ist, in der die Vielzahl von Zellen (10) aufgenommen ist;
ein Öffnungsabschnitt (8a), der in jeder Zelle (10) zum Ablassen von Gas ausgebildet ist, mit der Abgaskammer (32) verbunden ist; und
die Abgaskammer (32) mit dem an der Seitenfläche des Behälters (30) vorhandenen Auslass (33) verbunden ist.

## Revendications

1. Bloc-batterie comprenant :
une pluralité de modules de batterie empilés (100) ; dans lequel
chaque module de batterie (100) comporte
un carter (30) dans lequel une pluralité de cellules (10) sont logées ; et
une sortie (33) qui est disposée sur une surface latérale du carter (30) et à travers laquelle du gaz libéré de la cellule (10) est libéré à l'extérieur du carter (30) ; dans lequel
le bloc-batterie est fixé à un encadrement (40) construit à l'aide de corps de cadre ayant chacun une structure creuse ou un logement (80) formé par liaison de plaques plates (80a-80c) ayant chacune une structure creuse ;
**caractérisé en ce que** l'encadrement (40) comporte
un corps de cadre supérieur (40a) et un corps de cadre inférieur (40b) dans une direction d'empilement des modules de batterie (100) ; et
des corps de cadre verticaux (40c) à l'aide desquels le corps de cadre supérieur (40a) est relié au corps de cadre inférieur (40b) ; dans lequel
chacun du corps de cadre supérieur (40a), du corps de cadre inférieur (40b) et des corps de cadre verticaux (40c) a une section creuse à l'intérieur ;
le bloc-batterie comporte en outre un conduit d'air d'échappement (70) reliant les sorties (33) de la pluralité de modules de batterie (100) dans la direction d'empilement ;
le conduit d'air d'échappement (70) est relié à la section creuse du corps de cadre inférieur (40b) de l'encadrement (40) ou aux sections creuses des corps de cadre verticaux (40c) de l'encadrement (40) ; et
le gaz libéré à travers les sorties (33) des modules de batterie (100) s'écoule à travers le conduit d'air d'échappement (70) et la section creuse du corps de cadre inférieur (40b) de l'encadrement (40) ou les sections creuses des corps de cadre verticaux (40c) de l'encadrement (40), et est libéré par un orifice d'échappement (60) prévu pour le corps de cadre supérieur (40a) ou une section d'extrémité supérieure de chacun des corps de cadre verticaux (40c) de l'encadrement (40) vers l'extérieur ; ou
le logement (80) comporte
une plaque plate supérieure (80a) et une plaque plate inférieure (80b) dans une direction d'empilement des modules de batterie (100) ; et
des plaques plates verticales (80c) à l'aide desquelles la plaque plate supérieure (80a) est reliée à la plaque plate inférieure (80b) ;
chacune de la plaque plate supérieure (80a), de la plaque plate inférieure (80b) et des plaques plates verticales (80c) a une section creuse à l'intérieur ;
le bloc-batterie comporte en outre un conduit d'air d'échappement (70) reliant les sorties (33) de la pluralité de modules de batterie (100) dans la direction d'empilement ;
le conduit d'air d'échappement (70) est relié à la section creuse de la plaque plate inférieure (80b) ou aux sections creuses des plaques plates verticales (80c) ; et
le gaz libéré à travers les sorties (33) des modules de batterie (100) s'écoule à travers le conduit d'air d'échappement (70) et la section creuse de la plaque plate inférieure (80b) du logement (80) ou les sections creuses des plaques plates verticales (80c) du logement (80), et est libéré par un orifice d'échappement (60) prévu pour la plaque plate supérieure (80a) ou une section d'extrémité supérieure de chacune des plaques plates verticales (80c) vers l'extérieur.

2. Bloc-batterie selon la revendication 1, dans lequel
le bloc-batterie est fixé à l'encadrement (40) ; et
une cloison pour bloquer un écoulement du gaz libéré à travers les sorties (33) des modules de batterie (100) est disposée dans une partie de la section creuse du corps de cadre inférieur (40b) ou dans certaines des sections creuses des corps de cadre verticaux (40c) de l'encadrement (40) ; et
le gaz libéré à travers les sorties (33) des modules de batterie (100) s'écoule à travers la section creuse du corps de cadre inférieur (40b) de l'encadrement (40), et est libéré par l'orifice d'échappement (60) disposé dans le corps de cadre supérieur (40a) de l'encadrement (40) vers l'extérieur lorsque la cloison bloque l'écoulement du gaz.

3. Bloc-batterie selon la revendication 1, dans lequel
le bloc-batterie est fixé à l'encadrement (40) ; et
la section creuse de l'encadrement (40) a une superficie en coupe transversale de 500 mm² ou plus.

4. Bloc-batterie selon la revendication 1, dans lequel
le bloc-batterie est fixé à l'encadrement (40) ; et
l'encadrement (40) est constitué d'un matériau métallique.

5. Bloc-batterie selon la revendication 1, dans lequel
le module de batterie (100) comporte en outre une chambre d'échappement (32) séparée d'une chambre de batterie dans laquelle la pluralité de cellules (10) sont logées ;
une partie d'ouverture (8a) formée dans chaque cellule (10) pour libérer du gaz est reliée à la chambre d'échappement (32) ; et
la chambre d'échappement (32) est reliée à la sortie (33) disposée sur la surface latérale du carter (30).
